# EUROPÄISCHE PATENTSCHRIFT

(11) **EP 3 301 378 B1**
(45) Veröffentlichungstag und Bekanntmachung des Hinweises auf die Patenterteilung: **30.12.2020**
(21) Anmeldenummer: 17198940.3
(22) Anmeldetag: 23.07.2015
(51) Int. Cl.: F24H 1/28, F24H 8/00, F24H 9/00, F28F 1/40, F28F 1/00, F24H 1/20, F28F 1/06

(54) **WÄRMEÜBERTRAGERROHR UND HEIZKESSEL MIT EINEM SOLCHEN WÄRMEÜBERTRAGERROHR**
HEAT EXCHANGER TUBE AND HEATING BOILER HAVING SUCH A HEAT EXCHANGER TUBE
TUYAU DE TRANSFERT DE CHALEUR ET CHAUDIÈRE DOTÉE D'UN TEL TUYAU DE TRANSFERT DE CHALEUR

(43) Veröffentlichungstag der Anmeldung: 04.04.2018
(62) Dokumentnummer(n) der früheren Anmeldung(en) nach Art. 76 EPÜ: 15178123.4 / 3 040 638
(73) Patentinhaber: Hoval Aktiengesellschaft, 9490 Vaduz (LI)
(72) Erfinder: Telian, Markus Walter, 6912 Hörbranz (AT)
(74) Vertreter: Zenz Patentanwälte Partnerschaft mbB

(56) Entgegenhaltungen:
- EP-A1- 0 752 088
- WO-A1-2015/050441
- KR-B1- 101 521 353
- US-A- 5 839 505

## Beschreibung

Die Erfindung richtet sich auf ein Wärmeübertragerrohr eines Heizkessels, insbesondere eines Brennwertkessels, aufweisend ein Außenrohr, das von Abgasen der Kesselfeuerung durchströmt werden kann und das außenseitig vom Heizwasser umgeben sein kann, und einen in das Außenrohr eingeschobenen Profileinsatz, der zur Vergrößerung der inneren Oberfläche des Außenrohres in dessen Längsrichtung verlaufende Rippen aufweist und mit dem Außenrohr in wärmeleitendem Kontakt steht, wobei ein erster Längsabschnitt des Außenrohres zylindrisch glattwandig ausgebildet ist, und wobei sich der Profileinsatz ausschließlich über den ersten Längsabschnitt des Außenrohres erstreckt.

Ebenso richtet sich die Erfindung auf einen Heizkessel, insbesondere einen Brennwertkessel, zur Erwärmung von Heizwasser eines Heizkreislaufes, aufweisend ein Gehäuse, welches einen Heizwasserraum begrenzt und welches eine dem Heizwasserraum vorgeschaltete Brennkammer aufweist.

Ein solcher Heizkessel der eingangs bezeichneten Art, wie er von der Anmelderin feilgeboten wird, kann als Brennwertkessel mit einer Gasfeuerung oder Flüssigfeuerung (Heizöl, Kerosin oder dergleichen) betrieben werden. Bei einem solchen Brennwertkessel, werden die Verbrennungsgase bis zur Kondensation der Abgasfeuchtigkeit abgekühlt, um auch die Kondensationswärme auszunutzen. Voraussetzung dafür ist, dass der Heizkessel bzw. Brennwertkessel mit einer Temperatur des Heizwassers betrieben wird, die am Ende des Verbrennungsgasweges durch den Heizkessel niedriger ist als die Taupunkttemperatur der Verbrennungsgase. Man ist bestrebt, auf einem möglichst kurzen Weg der Verbrennungsgase durch die wassergekühlten Wärmeübertragerrohre des Heizkessels die Verbrennungsgase von der hohen Eintrittstemperatur auf die zwischen der Taupunkttemperatur und der am Heizwasserrücklauf des Heizkessels herrschenden niedrigsten Heizwassertemperatur abzukühlen. Bekannt sind dazu Wärmeübertragungsrohre, wobei ein Wärmeübertragerrohr der eingangs bezeichneten Art zum Beispiel aus der US 5 839 505 A bekannt ist. Weitere Wärmeübertragerrohre ohne Querschnittsverengungselement sind ferner aus der EP 0 752 088 A1 und der EP 2 781 873 A1 bekannt, wobei die WO 2015/050441 ein Rohr für Wärmetauscher offenbart, welches einen Längsabschnitt aufweist, in welchem Einschnitte ausgebildet sind, die sich bis zum Rohrauslass erstrecken Die Dokumente US 5 839 505 A und EP 0 752 088 A1 zeigen die Merkmale des Oberbegriffs des unabhängigen Anspruchs 1.

Der Erfindung liegt die Aufgabe zugrunde eine Lösung zu schaffen, die auf konstruktiv einfache Weise und kostengünstig ein Wärmeübertragerrohr sowie einen Heizkessel bereitstellt, die eine noch größere Wärmeübertragungsleistung von den Verbrennungsgasen an das Heizwasser im Heizkessel ermöglichen.

Bei einem Wärmeübertragerrohr der eingangs bezeichneten Art wird die Aufgabe erfindungsgemäß dadurch gelöst, dass ein zweiter Längsabschnitt des Außenrohres wenigstens ein den Durchströmungsquerschnitt verengendes Querschnittsverengungselement aufweist, wobei das wenigstens eine Querschnittsverengungselement wenigstens zwei erste Einbuchtungen umfasst, die in der Wandung des zweiten Längsabschnitts des Außenrohres ausgebildet sind, wobei das Querschnittsverengungselement zusätzlich zu den wenigstens zwei ersten Einbuchtungen wenigstens zwei zweite Einbuchtungen umfasst, die von der Wandung des zweiten Längsabschnitts des Außenrohres ausgebildet sind, wobei die zwei zweiten Einbuchtungen sich diametral gegenüberliegend angeordnet sind und mit Bezug auf eine zweite Rohrebene, die senkrecht zu der ersten Rohrebene verläuft, spiegelsymmetrisch ausgebildet sind, und wobei das wenigstens eine Querschnittsverengungselement an einem Einlass des Außenrohres angeordnet ist, das den Einlass zur Zuführung von Abgasen und einen Auslass zur Abführung von Abgasen aufweist. Mit anderen Worten ist der Profileinsatz ausschließlich innerhalb des ersten Längsabschnitts an dem zur Zuführung von Abgasen dienenden Einlass angeordnet.

Ebenso wird bei einem Heizkessel der eingangs bezeichneten Art die Aufgabe erfindungsgemäß dadurch gelöst, dass innerhalb des Gehäuses wenigstens ein Wärmeübertragerrohr nach einem der Ansprüche 1 bis 10 angeordnet ist, das von der Brennkammer abgeht und sich durch den Heizwasserraum verlaufend erstreckt. Dabei ist wenigstens ein Wärmeübertragungsrohr für sehr kleine Leistungen von etwa 10 kW denkbar, wohingegen in der Mehrzahl der Anwendungsfälle mehrere Wärmeübertragungsrohre vorgesehen sein werden. Das wenigstens eine Wärmeübertragerrohr kann beispielsweise vertikal oder auch horizontal durch den Heizwasserraum verlaufen, wobei auch jeder andere Winkel zwischen 90° (vertikal) und 0° (horizontal) denkbar ist.

Vorteilhafte und zweckmäßige Ausgestaltungen und Weiterbildungen der Erfindung ergeben sich aus den Unteransprüchen.

Durch die Erfindung werden ein Wärmeübertragerrohr sowie ein Heizkessel mit mehreren solchen Wärmeübertragerrohren zur Verfügung gestellt, die sich jeweils durch eine funktionsgerechte Konstruktion auszeichnen und einen einfachen und kostengünstigen Aufbau aufweisen. Bei den bekannten Wärmeübertragerrohren aus dem Stand der Technik war es das Problem, dass die heißen Verbrennungsgase durch das Wärmeübertragerrohr von dessen Einlass bis zu dessen Auslass strömten und sich dabei abkühlten. Die dabei einhergehende und signifikante Reduzierung des Volumens der Verbrennungsgase führte dazu, dass die Strömungsgeschwindigkeit und die Turbulenz bis zum Auslass des Wärmeübertragerrohres stark verringert wurden, was sich nachteilig auf die Effizienz der Wärmeübertragung auswirkte. Demgegenüber wird bei der vorliegenden Erfindung durch das wenigstens eine den Durchströmungsquerschnitt des Außenrohres verengende Querschnittsverengungselement der Druckverlust stromauf des Querschnittsverengungselements, also zwischen Brennkammer und Querschnittsverengungselement erhöht, wodurch erfindungsgemäß deutlich mehr Energie in der Brennkammer und im zweiten Längsabschnitt des Wärmeübertragerrohres vor dem Querschnittsverengungselement übertragen werden kann. Im Längsabschnitt vor dem Querschnittsverengungselement wird durch den verkleinerten Durchströmungsquerschnitt die Strömungsgeschwindigkeit des Abgases massiv angehoben, wodurch zusätzlich die Wärmeübertragung und damit die Energieausnutzung des Abgases erhöht werden. Im Längsabschnitt stromab der Verengung des Durchströmungsquerschnitts, also stromab des Querschnittsverengungselements, expandiert das Abgas wieder und wird in den Längsabschnitt des Außenrohres mit dem Profileinsatz geführt. Mit der sehr großen Oberfläche aufgrund der in Längsrichtung des Wärmeübertragerrohres verlaufenden Rippen des Profileinsatzes wird in dem ersten Längsabschnitt des Außenrohres das Abgas bis unter den Taupunkt abgekühlt, was sich vorteilhaft auf die Brennwerttechnik und damit auf den Wirkungsgrad des Heizkessels auswirkt. Die Vorteile der Erfindung durch das Wärmeübertragerrohr und des damit ausgestatteten Heizkessels lassen sich wie folgt beschreiben. Im Vergleich zu Wärmeübertragerrohren ohne Verengung bewirkt die Erhöhung der Druckverluste stromauf der Verengung eine verbesserte Wärmeübertragung in der Brennkammer und am Eintritt des Wärmeübertragerrohres. Ferner führt die Anhebung der Strömungsgeschwindigkeit im Bereich der Verengung und insbesondere stromab der Verengung zu einer besseren Wärmeübertragung, weil durch das Querschnittsverengungselement die vor der Verengung laminare Strömung stromab der Verengung in eine turbulente Strömung umschlägt. Schließlich bewirkt die Vergrößerung der Wärmeübertragungsfläche durch die Rippen des Profileinsatzes im ersten Längsabschnitt des Wärmeübertragerrohres geringe Strömungsgeschwindigkeiten stromab der Verengung und führt zu tiefen Abgastemperaturen, was zusätzlich zu einer Verbesserung der Wärmeübertragung auf das Heizwasser beiträgt.

Zur Erhöhung der Strömungsgeschwindigkeit stromab der Einbuchtungen ist gemäß einer weiteren Ausgestaltung vorgesehen, dass zwischen den wenigstens zwei ersten Einbuchtungen wenigstens ein erster Durchströmungsspalt ausgebildet ist, der zwischen 2 % und 3 % des Durchmessers des Außenrohres beträgt.

Zur weiteren Steigerung der Effektivität der Querschnittsverengung ist erfindungsgemäß vorgesehen, dass das Querschnittsverengungselement zusätzlich zu den wenigstens zwei ersten Einbuchtungen wenigstens zwei zweite Einbuchtungen umfasst, die von der Wandung des zweiten Längsabschnitts des Außenrohres ausgebildet sind, wobei die zwei zweiten Einbuchtungen sich diametral gegenüberliegend angeordnet sind und mit Bezug auf eine zweite Rohrebene, die senkrecht zu der ersten Rohrebene verläuft, spiegelsymmetrisch ausgebildet sind.

Ferner sieht die Erfindung in Ausgestaltung der zweiten Einbuchtungen des Querschnittsverengungselements vor, dass zwischen den wenigstens zwei zweiten Einbuchtungen wenigstens ein zweiter Durchströmungsspalt ausgebildet ist, der zwischen 18 % und 22 % des Durchmessers des Außenrohres beträgt.

Im Hinblick auf eine Erhöhung der Strömungsgeschwindigkeit und der Turbulenz stromab des Querschnittsverengungselements sieht die Erfindung vor, dass die ersten und zweiten Einbuchtungen an einer gleichen axialen Position des zweiten Längsabschnitts des Außenrohres ausgebildet sind. Selbstverständlich ist es denkbar, dass die ersten und zweiten Einbuchtungen axial versetzt an axial unterschiedlichen Positionen des zweiten Längsabschnitts des Außenrohres ausgebildet sind.

Ebenso von großem Vorteil für eine Erhöhung der Strömungsgeschwindigkeit und der Turbulenz stromab des Querschnittsverengungselements wirkt es sich in Ausgestaltung der Erfindung aus, wenn der von den ersten und zweiten Einbuchtungen ausgebildete Durchströmungsquerschnitt des zweiten Längsabschnitts des Außenrohres einen H-förmigen Querschnitt aufweist.

Für das erfindungsgemäße Wärmeübertragerrohr hat es sich als optimal erwiesen, wenn gemäß einer Ausgestaltung der Erfindung die axiale Länge des ersten Längsabschnitts mindestens dem 2-fachen der axialen Länge des zweiten Längsabschnitts entspricht. In alternativer Ausgestaltung kann die axiale Länge des zweiten Längsabschnitts größer sein als die axiale Länge des ersten Längsabschnitts.

Die Erfindung sieht in vorteilhafter Ausgestaltung vor, dass der Profileinsatz einen Rohrkörper umfasst, der von wenigstens zwei Schalenelementen ausgebildet ist, die jeweils einen kreisausschnittsförmigen Querschnitt aufweisen. Durch diese Ausgestaltung sind die Wärmeübertragerrohre günstig und mit Hilfe eines einfachen Produktionsverfahrens herstellbar.

Von besonderem Vorteil ist es, wenn in Ausgestaltung des erfindungsgemäßen Wärmeübertragerrohres der Rohrkörper zwei Schalenelemente umfasst, die an ihren sich berührenden Längsrändern mit nutförmigen Vertiefungen und rippenartigen Vorsprüngen ausgebildet sind und damit dichtungsartig ineinandergreifen, wobei die zwei Schalenelemente auf ihrer Innenseite derart mit in den lichten Querschnitt des Rohrkörpers hineinragenden, in Längsrichtung des Außenrohres sich erstreckenden Rippen ausgebildet sind, dass jedes Schalenelement mit seinen Rippen ein einseitig offenes Profil bildet. Diese Ausbildung der Schalenelemente als zwei Halbschalen mit Rippen als einseitig offenes Profil ist einfach und preisgünstig herstellbar, beispielsweise durch Strangpressen.

Die Erfindung sieht in Ausgestaltung des erfindungsgemäßen Wärmeübertragerrohres vor, dass die zwei Schalenelemente jeweils an einem Längsrand mit einer Abdichtungsnut und am anderen Längsrand mit einer der Form der Abdichtungsnut angepassten Abdichtungsrippe ausgebildet sind. Durch diese Ausgestaltung nach Art einer Labyrinthdichtung wird in dem ersten Längsabschnitt des Außenrohres eine Spaltbildung verhindert, durch die Abgas oder Kondensat zwischen den Profileinsatz und das Außenrohr eindringen und zu Korrosion führen könnte.

Eine für die Herstellung des erfindungsgemäßen Wärmeübertragerrohres einfache und kostengünstige Möglichkeit besteht in Ausgestaltung der Erfindung darin, dass das wenigstens eine Querschnittsverengungselement als ein nach Art einer Düse ausgebildeter Rohreinsatz ausgeformt ist, der in das Außenrohr in dessen zweiten Längsabschnitt eingeschoben ist. Auf diese Weise muss nicht das Außenrohr durch die Berücksichtigung von Einpressungen bzw. Einbuchtungen für die Querschnittsverengung nachbearbeitet werden. Vielmehr ist es ausreichend, wenn ein separates Querschnittsverengungselement mit einem an den Innendurchmesser des Außenrohres angepassten Durchmesser hergestellt wird, das dann mit dem Profileinsatz zusammen in das Außenrohr bei Montage oder Auslieferung des Wärmeübertragerrohres eingeschoben werden kann.

Die Erfindung sieht in weiterer Ausgestaltung vor, dass das Außenrohr aus einer metallischen Legierung, vorzugsweise Stahl, und der Profileinsatz aus Aluminium gebildet ist. Das Außenrohr ist aufgrund der Materialwahl gegen das Abgaskondensat säure- und laugenkorrosionsbeständig und kann andererseits an seinen Enden in Rohrböden oder Rohrplatten eingeschweißt werden, die den die Wärmeübertragerrohre umgebenden Heizwasserraum einerseits von der Brennkammer und andererseits von einem unterhalb des Heizwasserraumes angeordneten Abgassammler des Heizkessels trennen.

Schließlich sieht die Erfindung zur Erhöhung der Effizienz der Wärmeübertragung vor, dass der zweite, das wenigstens eine Querschnittsverengungselement aufweisende Längsabschnitt des Außenrohres zwischen der Brennkammer und dem ersten Längsabschnitt des Außenrohres angeordnet ist. Auf diese Weise beeinflusst das Querschnittsverengungselement des Wärmeübertragerrohres im Bereich seines Einlasses die Strömung der Verbrennungsgase und hebt die Strömungsgeschwindigkeit sowie die Turbulenz in dem Wärmeübertragerrohr an.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhaft ein bevorzugtes Ausführungsbeispiel der Erfindung dargestellt ist. In der Zeichnung zeigt:
Figur 1 einen erfindungsgemäßen Heizkessel in perspektivischer Ansicht,
Figur 2 eine weitere perspektivische Darstellung des Heizkessels mit zum Teil geschnittenem Gehäuse,
Figur 3 eine Einzelteildarstellung eines erfindungsgemäßen Wärmeübertragerrohres des Heizkessels in Perspektivansicht,
Figur 4 eine Schnittansicht des erfindungsgemäßen Wärmeübertragerrohres,
Figur 5 in perspektivischer Darstellung das Wärmeübertragerrohr gemäß der Erfindung,
Figur 6 eine seitliche Schnittansicht auf das erfindungsgemäße Wärmeübertragerrohr entlang einer Rohrebene,
Figur 7 eine weitere seitliche Schnittansicht auf das erfindungsgemäße Wärmeübertragerrohr entlang einer anderen Rohrebene,
Figur 8 eine vergrößerte Darstellung eines Längsabschnitts des Wärmeübertragerrohres aus Figur 6,
Figur 9 eine andere vergrößerte Darstellung eines Längsabschnitts des Wärmeübertragerrohres aus Figur 7,
Figur 10 eine Querschnittsansicht des erfindungsgemäßen Wärmeübertragerrohres für eine axiale Position,
Figur 11 eine weitere Querschnittsansicht des erfindungsgemäßen Wärmeübertragerrohres für eine andere axiale Position,
Figur 12 eine Querschnittsansicht für das Wärmeübertragerrohr entsprechend der in Figur 10 gezeigten Position, wobei der Durchströmungsquerschnitt kenntlich gemacht ist, und
Figur 13 eine perspektivische Darstellung des erfindungsgemäßen Wärmeübertragerrohres, wobei der Bereich des Querschnittsverengungselements als Schnittansicht gezeigt ist.

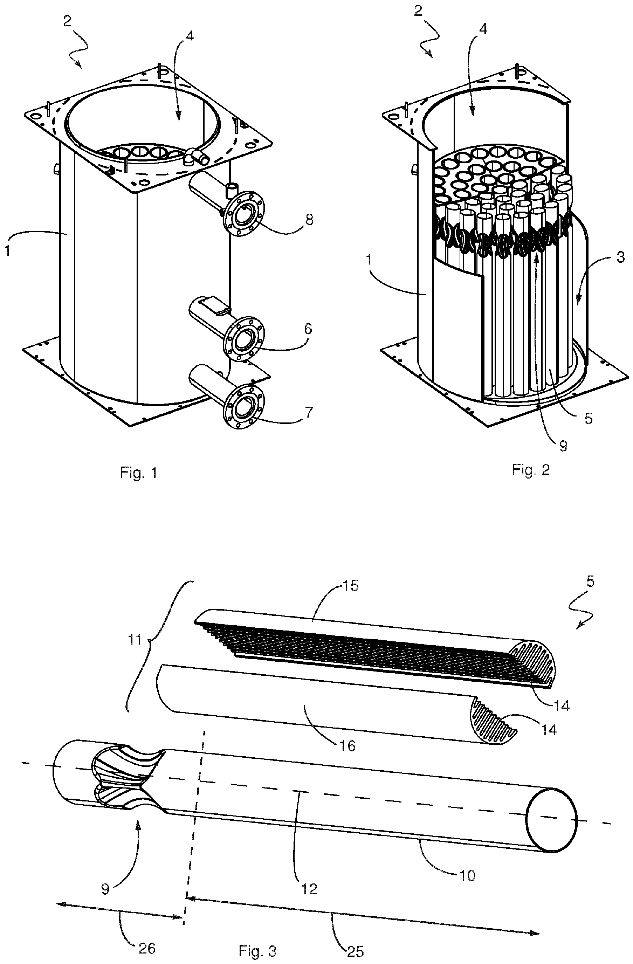

In Figur 1 ist das Gehäuse 1 eines Heizkessels 2 in einer perspektivischen Ansicht dargestellt, wobei in Figur 2 das Gehäuse 1 zum Teil ausgeblendet ist, um einen besseren Einblick in das Innere des Gehäuses 1 zu ermöglichen. Der Heizkessel 2 dient zur Erwärmung von Heizwasser eines nicht näher dargestellten Heizkreislaufes und kann als Brennwertkessel ausgeführt sein. Das Gehäuse 1 umschließt einen Heizwasserraum 3 und umfasst ferner eine topfartig oder konisch ausgebildete Brennkammer 4, die oberhalb des Heizwasserraumes 3 angeordnet ist und der ein nicht dargestellter Brenner zugeordnet ist. Am Boden der Brennkammer 4 ist ein Wärmeübertrager angeordnet, der eine Vielzahl von Wärmeübertragerrohren 5 aufweist, die den Heizwasserraum 3 durchsetzen und in einer nicht näher dargestellten Abgassammelkammer münden. Die Wärmeübertragerrohre 5 gehen folglich von dem Boden der Brennkammer 4 ab und erstrecken sich in dem gezeigten Ausführungsbeispiel im Wesentlichen vertikal durch den Heizwasserraum 3, wobei alternativ auch ein beliebiger Winkel zwischen 0° für einen horizontalen Verlauf und 90° für einen vertikalen Verlauf der Wärmeübertragerrohre 5 im Heizwasserraum denkbar ist. Die vom Heizwasser umströmten Außenflächen der Wärmeübertragerrohre 5 geben dabei ihre Wärme an das Heizwasser im Heizwasserraum 3 ab, wobei in den Wärmeübertragerrohren 5 ein Temperaturgefälle derart besteht, dass die Temperatur im oberen Bereich die Temperatur im unteren Bereich wesentlich übersteigt. In den Heizwasserraum münden Rücklaufstutzen 6 bzw. 7, über die abgekühltes Rücklaufwasser unterschiedlicher Heizkreisläufe dem Heizwasserraum 3 wieder zugeführt wird. Der mit dem Rücklaufstutzen 6 verbundene Heizkreislauf dient beispielsweise der Brauchwassererwärmung, hat also eine vergleichsweise hohe Rücklauftemperatur, während der untere Rücklaufstutzen 7 mit einem Heizkreislauf für beispielsweise eine Fußbodenheizung, also mit relativ niedriger Rücklauftemperatur, verbunden ist. Das erwärmte Heizwasser für die Heizkreisläufe wird über den oberen Vorlaufstutzen 8 entnommen.

Figur 2 zeigt die Wärmeübertragerrohre 5, die in ihrem oberen Bereich erfindungsgemäß mit Einbuchtungen bzw. jeweils mit einer umlaufenden Einpressung 9 ausgebildet sind. Ein einzelnes Wärmeübertragerrohr 5 gemäß der vorliegenden Erfindung ist in einer perspektivischen Einzelteildarstellung in Figur 3 zu sehen. Wie zu erkennen ist, weist das Wärmeübertragerrohr 5 ein Außenrohr 10, das im Betrieb des Heizkessels 2 von Abgasen der Kesselfeuerung durchströmt wird und außenseitig von dem Heizwasser umgeben ist, und einen im zusammengebauten Zustand in das Außenrohr 10 eingeschobenen Profileinsatz 11 auf. Das Außenrohr 10 weist folglich einen zur Zuführung von Abgasen dienenden Einlass und einen zur Abführung von Abgasen dienenden Auslass auf, wobei der Profileinsatz 11 an dem Auslass angeordnet ist. In dem dargestellten Ausführungsbeispiel ist das Außenrohr 10 aus einer metallischen Legierung, vorzugsweise Stahl, gebildet. Der Profileinsatz 11 weist zur Vergrößerung der inneren Oberfläche des Außenrohres 10 in dessen Längsrichtung 12 verlaufende Rippen 14 auf und steht mit dem Außenrohr 10 in wärmeleitendem Kontakt, wobei zur Verbesserung des Wärmeübergangs der Profileinsatz 11 aus Aluminium gebildet ist.

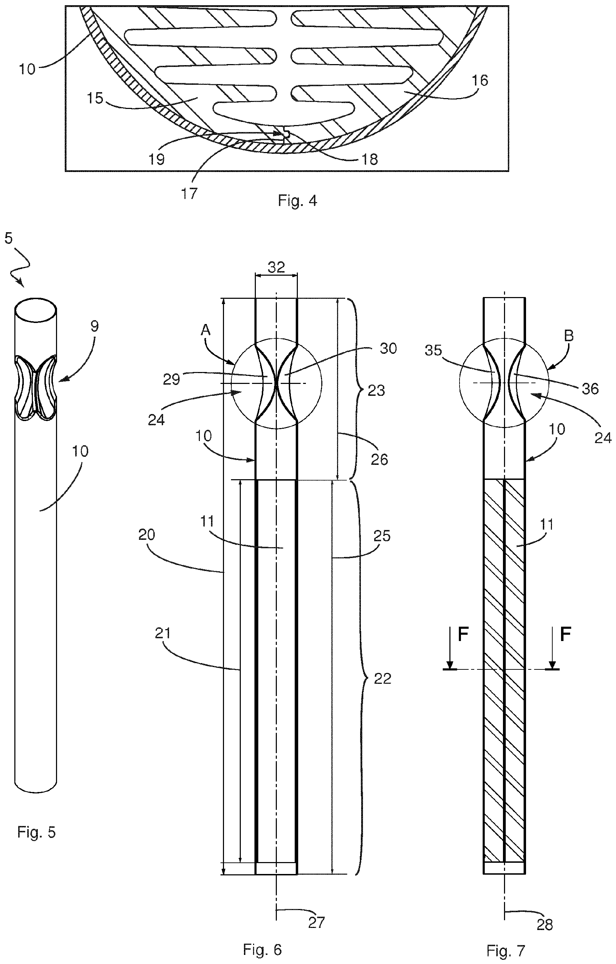

In dem dargestellten Ausführungsbeispiel umfasst der Profileinsatz 11 einen Rohrkörper, der von zwei Schalenelementen 15, 16 ausgebildet ist. Die zwei Schalenelemente 15, 16 weisen jeweils einen halbkreisförmigen Querschnitt auf. Denkbar wäre natürlich auch ein einteiliger Profileinsatz 11, der allerdings nicht kostengünstig herstellbar wäre. Daher ist eher ein wenigstens zweiteiliger Profileinsatz 11 anzustreben, dessen Schalenelemente kreisausschnittsförmig ausgebildet sind, um einen geschlossenen Profileinsatz 11 zu ergeben. Gemäß dem Ausführungsbeispiel umfasst der Rohrkörper somit zwei Schalenelemente 15, 16, die an ihren sich berührenden Längsrändern 17 mit nutförmigen Vertiefungen 18 und rippenartigen Vorsprüngen 19 ausgebildet sind und damit dichtungsartig ineinandergreifen, wie in Figur 4 in einer vergrößerten Detailansicht gezeigt ist. Die zwei Schalenelemente 15, 16 sind auf ihrer Innenseite mit in den lichten Querschnitt des Rohrkörpers hineinragenden, in Längsrichtung 12 des Außenrohres 10 sich erstreckenden Rippen 14 ausgebildet, wobei jedes Schalenelement 15, 16 mit seinen Rippen 14 ein einseitig offenes Profil bildet. Insbesondere sind die zwei Schalenelemente 15, 16 jeweils an einem Längsrand 12 mit der als Abdichtungsnut fungierenden Vertiefung 18 und am anderen Längsrand 12 mit einer in Form einer Abdichtungsnut angepassten Abdichtungsrippe, welche der Vorsprung 19 ist, ausgebildet. Der aus den beiden Schalenelementen 15, 16 zusammengefügte Profileinsatz 11 liegt unmittelbar auf seiner gesamten Umfangsfläche am Außenrohr 10 an und ist mit einem Außendurchmesser hergestellt, der geringfügig kleiner ist als der Innendurchmesser des Außenrohres 10, damit sich der Profileinsatz 11 problemlos in das Außenrohr 10 einschieben lässt.

Wie bereits aus Figur 3 zu erkennen war, weisen das Außenrohr 10 und der Profileinsatz 11 eine unterschiedliche axiale Länge auf, was in den Figuren 6 und 7 dargestellt ist, die verschiedene Seitenansichten des erfindungsgemäßen Wärmeübertragerrohres 5 zeigen, wohingegen Figur 5 ein einzelnes Wärmeübertragerrohr 5 zeigt, bei dem der an dem zur Abführung von Abgas dienenden Auslass des Außenrohres 10 angeordnete Profileinsatz 11 in das Außenrohr 10 eingeschoben ist und von außen nicht zu erkennen ist.

Aus Figur 6 geht hervor, dass die axiale Länge 20 des Außenrohres 10 idealer Weise dem 1,5-fachen der axialen Länge 21 des Profileinsatzes 11 entspricht, wobei es auch denkbar ist, dass die axiale Länge 20 des Außenrohres dem 1,3-fachen oder dem 1,7-fachen der axialen Länge 21 des Profileinsatzes 11 entspricht. Die unterschiedlichen axialen Längen 20, 21 von Außenrohr 10 und Profileinsatz 11 führen dazu, dass das Außenrohr 10 in zwei Längsabschnitte unterteilt werden kann. Dabei ist ein erster Längsabschnitt 22 des Außenrohres 10 zylindrisch glattwandig ausgebildet. Ein zweiter Längsabschnitt 23 des Außenrohres 10 weist wenigstens ein den Durchströmungsquerschnitt verengendes Querschnittsverengungselement 24 auf, welches an dem zur Zuführung von Abgasen dienenden Einlass des Außenrohres 10 angeordnet ist. Dabei erstreckt sich der an dem zur Abführung von Abgasen dienende Profileinsatz 11 ausschließlich über den ersten Längsabschnitt 22 des Außenrohres 10. Dies führt dazu, dass bei dem dargestellten Ausführungsbeispiel die axiale Länge 25 des ersten Längsabschnitts 22 mindestens dem 2-fachen der axialen Länge 26 des zweiten Längsabschnitts 23 entspricht. Als alternatives Längenverhältnis ist es auch bei sehr speziellen Einsatzfällen möglich, dass die axiale Länge 26 des zweiten Längsabschnitts 23 größer ist als die axiale Länge 25 des ersten Längsabschnitts 22.

Mit Bezug auf Figur 6 ist gezeigt, dass der Profileinsatz 11 nicht bündig mit dem Außenrohr 10 abschließt, sondern ein kleines Stück in das Außenrohr 10 eingeschoben ist, so dass der Profileinsatz 11 vollständig von dem Außenrohr 10 und insbesondere von dem ersten Längsabschnitt 22 aufgenommen ist. Ferner geht aus Figur 6 in Verbindung mit Figur 2 hervor, dass die zweiten, das Querschnittsverengungselement 24 aufweisenden Längsabschnitte 23 der jeweiligen Außenrohre 10 zwischen der Brennkammer 4 und den jeweiligen ersten Längsabschnitten 22 der entsprechenden Außenrohre 10 angeordnet sind. Folglich ist ein jeweiliges Querschnittsverengungselement 24 direkt stromab der Brennkammer 4 angeordnet.

Das Querschnittsverengungselement 24 könnte dabei als ein nach Art einer Düse ausgebildeter Rohreinsatz ausgeformt sein, der in den zweiten Längsabschnitt 23 des Außenrohres 10 eingeschoben ist. Damit würde dann das Außenrohr 10 durchgängig sowohl im ersten als auch im zweiten Längsabschnitt 22, 23 glattwandig ausgebildet sein. Demgegenüber weist in dem dargestellten Ausführungsbeispiel der zweite Längsabschnitt 23 des Außenrohres 10 Einpressungen bzw. Einbuchtungen 9 auf.

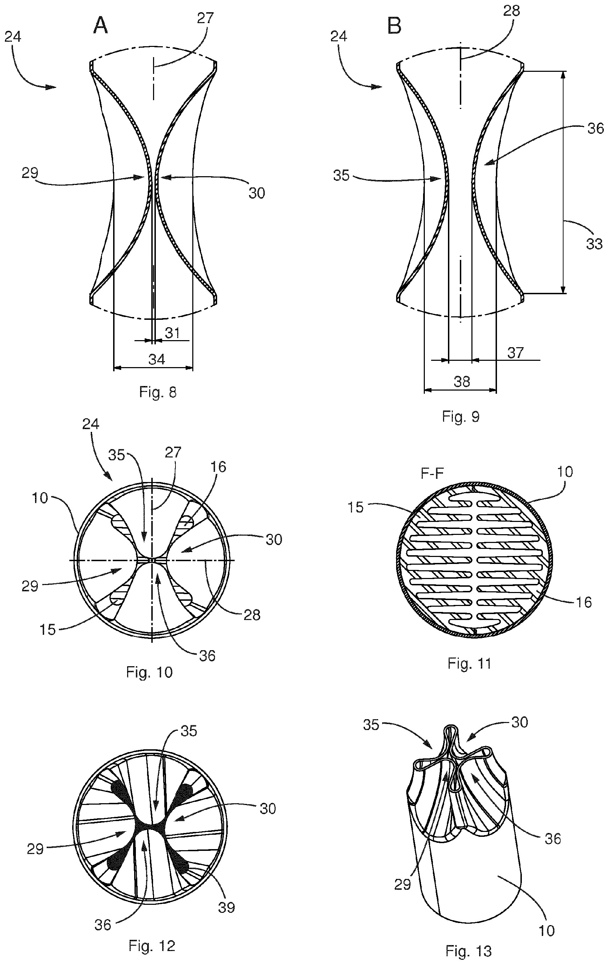

In Zusammenschau der Figuren 6 bis 13 wird nachstehend die Form des Querschnittsverengungselements 24 genauer beschrieben. Zu diesem Zweck wird der Querschnitt des Außenrohres 10 gemäß den Figuren 6, 7 und 10 anhand einer ersten Rohrebene 27 und einer zweiten Rohrebene 28, die senkrecht zu der ersten Rohrebene 27 verläuft, unterteilt. Figur 6 zeigt dabei eine Schnittdarstellung entlang der ersten Rohrebene 27, wohingegen Figur 7 eine Schnittdarstellung entlang der zweiten Rohrebene 28 zeigt. Wie aus den Figuren 6 bis 13 ersichtlich ist, umfasst das Querschnittsverengungselement 24 zwei erste Einbuchtungen bzw. Einpressungen 29, 30, die in der Wandung des zweiten Längsabschnitts 23 des Außenrohres 10 ausgebildet sind. Insbesondere sind die ersten Einbuchtungen 29, 30 in die Wandung des zweiten Längsabschnitts 23 eingedrückt, so dass die ersten Einbuchtungen 29, 30 konkav ausgebildete bzw. nach innen gewölbte Einpressungen darstellen. Die zwei ersten Einbuchtungen 29, 30 sind sich diametral gegenüberliegend angeordnet und mit Bezug auf die erste Rohrebene 27 spiegelsymmetrisch ausgebildet. Zwischen den zwei ersten Einbuchtungen 29, 30 ist ein erster Durchströmungsspalt 31 (siehe Figur 8) ausgebildet, der zwischen 2 % und 3 % des Durchmessers 32 (siehe Figur 6) des Außenrohres 10 beträgt, wie die in Figur 8 gezeigte Vergrößerung des Ausschnitts A aus Figur 6 zeigt. Zur Ausbildung der ersten Einbuchtungen 29, 30 wird die Wandung des Außenrohres 10 punktuell von beiden Seiten des Rohres eingepresst, so dass nach innen gewölbte Einpressungen entstehen, die an dem Punkt ihrer geringsten Entfernung den ersten Durchströmungsspalt 31 ausbilden. Dabei wird die Wandung für die Einbuchtungen 29, 30 über eine axiale Länge 33 (siehe Figur 9) verformt, die dem 0,4-fachen der axialen Länge 26 des zweiten Längsabschnitts 23 entspricht, wobei auch eine axiale Länge 33 möglich ist, die dem 0,3-fachen bis 0,5-fachen der axialen Länge 26 entspricht. Dabei wird die Wandung auf dieser axialen Länge 33 der Verformung insgesamt derart für die ersten Einbuchtungen 29, 30 eingedrückt, dass die Wandung über der axialen Länge 33 einen maximalen Durchmesser 34 für die ersten Einbuchtungen 29, 30 aufweist, der dem 0,6-fachen des Durchmessers 32 des glattwandigen Außenrohres 10 entspricht, wobei auch ein maximaler Durchmesser 34 möglich ist, der dem 0,5-fachen bis 0,7-fachen des Durchmessers 32 des glattwandigen Außenrohres 10 entspricht.

Die Figuren 7 und 9 zeigen weitere Darstellungen für zweite Einbuchtungen 35, 36, wobei die axiale Länge 33 der Verformung für die ersten Einbuchtungen 29, 30 und für die zweiten Einbuchtungen 35, 36 idealerweise identisch ist und daher nur in Figur 9 gezeigt ist. Die axiale Länge der Verformung kann aber auch für erste und zweite Einbuchtungen verschieden sein. In Figur 7 ist neben dem Profileinsatz 11 ferner ein Axialschnitt F-F eingezeichnet, der in Figur 11 dargestellt ist und das Außenrohr 10 sowie die beiden Schalenelemente 15, 16 zeigt, die den Profileinsatz 11 bilden. Die beiden zweiten Einbuchtungen 35, 36 bilden zusammen mit den beiden ersten Einbuchtungen 29, 30 das Querschnittsverengungselement 24, wobei die ersten Einbuchtungen 29, 30 unterschiedlich zu den zweiten Einbuchtungen 35, 36 ausgebildet sind. Auch die zwei zweiten Einbuchtungen 35, 36 sind sich diametral gegenüberliegend angeordnet, wobei sie mit Bezug auf die zweite Rohrebene 28 spiegelsymmetrisch ausgebildet sind. Auch die zweiten Einbuchtungen 35, 36 sind in die Wandung des zweiten Längsabschnitts 23 eingedrückt, so dass sie konkav ausgebildete bzw. nach innen gewölbte Einpressungen darstellen. Zwischen den zwei zweiten Einbuchtungen 35, 36 ist ein zweiter Durchströmungsspalt 37 ausgebildet, der größer ist als der erste Durchströmungsspalt 31 und der zwischen 18 % und 22 % des Durchmessers 32 (siehe Figur 6) des Außenrohres 10 beträgt, wie die in Figur 9 gezeigte Vergrößerung des Ausschnitts B aus Figur 7 zeigt. Auch hier wird zur Ausbildung der zweiten Einbuchtungen 35, 36 die Wandung des Außenrohres 10 punktuell von beiden Seiten des Rohres eingepresst, so dass nach innen gewölbte Einpressungen entstehen, die an dem Punkt ihrer geringsten Entfernung den zweiten Durchströmungsspalt 37 ausbilden. Die Wandung wird für die Einbuchtungen 35, 36 über die axiale Länge 33 (siehe Figur 9) verformt, die ebenfalls dem 0,4-fachen der axialen Länge 26 des zweiten Längsabschnitts 23 entspricht, wobei auch eine axiale Länge 33 möglich ist, die dem 0,3-fachen bis 0,5-fachen der axialen Länge 26 entspricht. Die Wandung wird zur Herstellung der zweiten Einpressungen bzw. Einbuchtungen 35, 36 auf dieser axialen Länge 33 insgesamt derart eingedrückt, dass die Wandung über der axialen Länge 33 einen maximalen Durchmesser 38 für die zweiten Einbuchtungen 35, 36 aufweist, der dem 0,55-fachen des Durchmessers 32 des glattwandigen Außenrohres 10 entspricht, wobei auch ein maximaler Durchmesser 38 möglich ist, der dem 0,45-fachen bis 0,65-fachen des Durchmessers 32 des glattwandigen Außenrohres 10 entspricht.

Mit der vorstehenden Ausbildung der ersten Einbuchtungen 29, 30 und zweiten Einbuchtungen 35, 36 erhält man einen Durchströmungsquerschnitt 39, der in Figur 10 anhand der schraffierten Fläche, welche den aus den Schalenelementen 15, 16 gebildeten Profileinsatz 11 kennzeichnet, und in Figur 12 anhand des schwarz eingefärbten Bereichs gezeigt ist. Da die ersten und zweiten Einbuchtungen 29, 30, 35, 36 an einer gleichen axialen Position des zweiten Längsabschnitts 23 des Außenrohres 10 ausgebildet sind, d. h. die ersten und zweiten Einbuchtungen 29, 30, 35, 36 erstrecken sich beide über die selbe axiale Länge 33, weist der von den ersten und zweiten Einbuchtungen 29, 30, 35, 36 ausgebildete Durchströmungsquerschnitt 39 des zweiten Längsabschnitts 23 des Außenrohres 10 einen H-förmigen Querschnitt auf. Figur 13 zeigt das Außenrohr 10, bei dem ein an dem H-förmigen Querschnitt beginnender Rohrabschnitt ausgelassen ist, so dass der H-förmig ausgebildete Durchströmungsquerschnitt 39 gut zu erkennen ist.

Bei dem erfindungsgemäßen Wärmeübertragerrohr 5 stellt das Querschnittsverengungselement 24 des Außenrohres 10 eine zweifach symmetrisch ausgebildete Verengung dar, durch die die aus dem Stand der Technik bekannten Nachteile vermieden werden. Denn bei den Wärmeübertragerrohren aus dem Stand der Technik ist es das Problem, dass die heißen Verbrennungsgase durch das Wärmeübertragerrohr von dessen Einlass bis zu dessen Auslass strömen und sich dabei abkühlen. Die dabei einhergehende und signifikante Reduzierung des Volumens der Verbrennungsgase führt dazu, dass die Strömungsgeschwindigkeit und die Turbulenz bis zum Auslass des Wärmeübertragerrohres stark verringert werden, was sich nachteilig auf die Effizienz der Wärmeübertragung auswirkt. Durch die Erfindung ist die Wärmeübertragung verbessert, weil die Strömungsgeschwindigkeit und die Turbulenz in dem erfindungsgemäßen Wärmeübertragerrohr 5 infolge des am zur Zuführung von Abgasen dienenden Einlass angeordneten Querschnittsverengungselements 24 erhöht werden. Die Einpressungen bzw. Einbuchtungen 29, 30, 35, 36 erhöhen den Druckverlust im stromaufwärts liegenden Bereich vor den Einpressungen bzw. Einbuchtungen 29, 30, 35, 36. Damit kann deutlich mehr Energie in der Brennkammer 4 und in dem Rohrabschnitt des Wärmeübertragerrohres 5 vor den Einbuchtungen 29, 30, 35, 36 übertragen werden. Im Bereich der Einbuchtungen 29, 30, 35, 36 wird durch die Verengung die Strömungsgeschwindigkeit massiv angehoben, womit ebenfalls die Wärmeübertragung und damit die Energienutzung erhöht werden. Im Bereich nach den Einbuchtungen 29, 30, 35, 36, also stromab der Verengung, expandiert das Abgas wieder und wird in den Abschnitt mit dem Profileinsatz 11 geführt. Mit der sehr großen Oberfläche der Rippen 14 des Profileinsatzes 11 wird hier das Abgas bis unter den Taupunkt abgekühlt und damit ein Vorteil in der Brennwerttechnik begünstigt.

Die wesentlichen Vorteile der Erfindung lassen sich wie folgt zusammenfassen:
- Anhebung des Druckverlustes, führt zu einer besseren Wärmeübertragung in der Brennkammer 4 und am Eintritt des Wärmeübertragerrohres 5.
- Anhebung der Strömungsgeschwindigkeit im Bereich der Verengung 24 bzw. Einbuchtungen 29, 30, 35, 36 führt zu einer besseren Wärmeübertagung (laminare vs. turbulente Strömung).
- Vergrößerung der Wärmeübertragungsfläche mit Hilfe der Rippen 14 des Profileinsatzes 11 für die geringe Strömungsgeschwindigkeit im ersten Längsabschnitt 22 des Wärmeübertragerrohres 5 nach bzw. stromab der Verengung 24 und den tiefen Abgastemperaturen führt zu einem verbesserten Wärmeübergang.

Mit erfindungsgemäßen Wärmeübertragerrohren 5 in einem Heizkessel 2 kann 85 - 90 % mehr Energie als mit den bisher bekannten Technologien übertragen werden.

Die vorstehend beschriebene Erfindung ist selbstverständlich nicht auf die beschriebene und dargestellte Ausführungsform beschränkt. Es ist ersichtlich, dass an der in der Zeichnung dargestellten Ausführungsform zahlreiche, dem Fachmann entsprechend der beabsichtigten Anwendung naheliegende, Abänderungen vorgenommen werden können, ohne dass dadurch der Bereich der Erfindung verlassen wird. Beispielsweise kann das Querschnittsverengungselement 24 (statt der vier Einpressungen) als nur eine Einbuchtung 9 in der Wandung des zweiten Längsabschnitts 23 des Außenrohres 10 ausgebildet sein oder es können mehrere Querschnittsverengungen durch entsprechende Einbuchtungen 9 hintereinander liegend in Achsrichtung 12 bzw. an verschiedenen axialen Rohrpositionen angeordnet sein. Zur Erfindung gehört alles dasjenige, was in der Beschreibung enthalten und/oder in der Zeichnung dargestellt ist, einschließlich dessen, was abweichend von den konkreten Ausführungsbeispielen für den Fachmann naheliegt.

## Patentansprüche

1. Wärmeübertragerrohr (5) eines Heizkessels (2), insbesondere eines Brennwertkessels, aufweisend ein Außenrohr (10), das von Abgasen der Kesselfeuerung durchströmt werden kann und das außenseitig von Heizwasser umgeben sein kann, und einen in das Außenrohr eingeschobenen Profileinsatz (11), der zur Vergrößerung der inneren Oberfläche des Außenrohres (10) in dessen Längsrichtung (12) verlaufende Rippen (14) aufweist und mit dem Außenrohr (10) in wärmeleitendem Kontakt steht,
wobei ein erster Längsabschnitt (22) des Außenrohres (10) zylindrisch glattwandig ausgebildet ist, und
wobei sich der Profileinsatz (11) ausschließlich über den ersten Längsabschnitt (22) des Außenrohres (10) erstreckt,
**dadurch gekennzeichnet, dass**
ein zweiter Längsabschnitt (23) des Außenrohres (10) wenigstens ein den Durchströmungsquerschnitt verengendes Querschnittsverengungselement (24) aufweist,
wobei das wenigstens eine Querschnittsverengungselement (24) wenigstens zwei erste Einbuchtungen (29, 30) umfasst, die in der Wandung des zweiten Längsabschnitts (23) des Außenrohres (10) ausgebildet sind,
wobei die zwei ersten Einbuchtungen (29, 30) sich diametral gegenüberliegend angeordnet sind und mit Bezug auf eine erste Rohrebene (27) spiegelsymmetrisch ausgebildet sind,
wobei das Querschnittsverengungselement (24) zusätzlich zu den wenigstens zwei ersten Einbuchtungen (29, 30) wenigstens zwei zweite Einbuchtungen (35, 36) umfasst, die von der Wandung des zweiten Längsabschnitts (23) des Außenrohres (10) ausgebildet sind,
wobei die zwei zweiten Einbuchtungen (35, 36) sich diametral gegenüberliegend angeordnet sind und mit Bezug auf eine zweite Rohrebene (28), die senkrecht zu der ersten Rohrebene (27) verläuft, spiegelsymmetrisch ausgebildet sind, und
wobei das wenigstens eine Querschnittsverengungselement (24) an einem Einlass des Außenrohres (10) angeordnet ist, das den Einlass zur Zuführung von Abgasen und einen Auslass zur Abführung von Abgasen aufweist.

2. Wärmeübertragerrohr (5) nach Anspruch 1, **dadurch gekennzeichnet, dass** zwischen den wenigstens zwei ersten Einbuchtungen (29, 30) wenigstens ein erster Durchströmungsspalt (31) ausgebildet ist, der zwischen 2 % und 3 % des Durchmessers (32) des Außenrohres (10) beträgt.

3. Wärmeübertragerrohr (5) nach Anspruch 1, **dadurch gekennzeichnet, dass** zwischen den wenigstens zwei zweiten Einbuchtungen (35, 36) wenigstens ein zweiter Durchströmungsspalt (37) ausgebildet ist, der zwischen 18 % und 22 % des Durchmessers (32) des Außenrohres (10) beträgt.

4. Wärmeübertragerrohr (5) nach Anspruch 1, **dadurch gekennzeichnet, dass** die ersten und zweiten Einbuchtungen (29, 30, 35, 36) an einer gleichen axialen Position des zweiten Längsabschnitts (23) des Außenrohres (10) ausgebildet sind.

5. Wärmeübertragungsrohr (5) nach Anspruch 1, **dadurch gekennzeichnet, dass** der von den ersten und zweiten Einbuchtungen (29, 30, 35, 36) ausgebildete Durchströmungsquerschnitt (39) des zweiten Längsabschnitts (23) des Außenrohres (10) einen H-förmigen Querschnitt aufweist.

6. Wärmeübertragerrohr (5) nach einem der vorhergehenden Ansprüche, **dadurch gekennzeichnet, dass** die axiale Länge (25) des ersten Längsabschnitts (22) mindestens dem 2-fachen der axialen Länge (26) des zweiten Längsabschnitts (23) entspricht.

7. Wärmeübertragerrohr (5) nach einem der vorhergehenden Ansprüche, **dadurch gekennzeichnet, dass** der Profileinsatz (11) einen Rohrkörper umfasst, der von wenigstens zwei Schalenelementen (15, 16) ausgebildet ist, die jeweils einen kreisausschnittsförmigen Querschnitt aufweisen.

8. Wärmeübertragerrohr (5) nach Anspruch 7, **dadurch gekennzeichnet, dass** der Rohrkörper zwei Schalenelemente (15, 16) umfasst, die an ihren sich berührenden Längsrändern (17) mit nutförmigen Vertiefungen (18) und rippenartigen Vorsprüngen (19) ausgebildet sind und damit dichtungsartig ineinandergreifen, wobei die zwei Schalenelemente (15, 16) auf ihrer Innenseite derart mit in den lichten Querschnitt des Rohrkörpers hineinragenden, in Längsrichtung (12) des Außenrohres (10) sich erstreckenden Rippen (14) ausgebildet sind, dass jedes Schalenelement (15, 16) mit seinen Rippen (14) ein einseitig offenes Profil bildet.

9. Wärmeübertragerrohr (5) nach Anspruch 8, **dadurch gekennzeichnet, dass** die zwei Schalenelemente (15, 16) jeweils an einem Längsrand (17) mit einer Abdichtungsnut (18) und am anderen Längsrand (17) mit einer der Form der Abdichtungsnut (18) angepassten Abdichtungsrippe (19) ausgebildet sind.

10. Wärmeübertragerrohr (5) nach einem der vorhergehenden Ansprüche, **dadurch gekennzeichnet, dass** das Außenrohr (10) aus einer metallischen Legierung, vorzugsweise Stahl, und der Profileinsatz (11) aus Aluminium gebildet ist.

11. Heizkessel (2), insbesondere Brennwertkessel, zur Erwärmung von Heizwasser eines Heizkreislaufes, aufweisend ein Gehäuse (1), welches einen Heizwasserraum (3) begrenzt und welches eine dem Heizwasserraum (3) vorgeschaltete Brennkammer (4) aufweist,
**dadurch gekennzeichnet, dass**
innerhalb des Gehäuses (1) wenigstens ein Wärmeübertragerrohr (5) nach einem der Ansprüche 1 bis 10 angeordnet ist, das von der Brennkammer (4) abgeht und sich durch den Heizwasserraum (3) verlaufend erstreckt.

12. Heizkessel (2) nach Anspruch 11, wobei der zweite, das wenigstens eine Querschnittsverengungselement (24) aufweisende Längsabschnitt (23) des Außenrohres (10) zwischen der Brennkammer (4) und dem ersten Längsabschnitt (22) des Außenrohres (10) angeordnet ist.

## Claims

1. A heat transfer tube (5) of a boiler (2), in particular a condensing boiler, having an outer tube (10) that can carry a flow of exhaust gases from boiler firing, and can be externally surrounded by heating water, and a profile insert (11) inserted into the outer tube, which in order to enlarge the inner surface of the outer tube (10) has ribs (14) running in its longitudinal direction (12), and is in heat conductive contact with the outer tube (10),
wherein a first longitudinal section (22) of the outer tube (10) has a cylindrically smooth-walled design, and
wherein the profile insert (11) extends exclusively over the first longitudinal section (22) of the outer tube (10),
**characterized in that**
a second longitudinal section (23) of the outer tube (10) has at least one cross section-constricting element (24) that constricts the flow cross section,
wherein the at least one cross section-constructing element (24) comprises at least two first recesses (29, 30), which are formed in the wall of the second longitudinal section (23) of the outer tube (10),
wherein the two first recesses (29, 30) are arranged diametrically opposite each other, and have a mirror-symmetrical design in relation to a first tube plane (27),
wherein the cross section-constricting element (24), in addition to the at least two first recesses (29, 30), comprises at least two second recesses (35, 36), which are formed by the wall of the second longitudinal section (23) of the outer tube (10),
wherein the two second recesses (35, 36) are arranged diametrically opposite each other, and have a mirror-symmetrical design in relation to a second tube plane (28) that runs perpendicular to the first tube plane (27), and
wherein the at least one cross section-constricting element (24) is arranged at an inlet of the outer tube (10), which has the inlet for supplying exhaust gases, and an outlet for removing exhaust gases.

2. The heat transfer tube (5) according to claim 1, **characterized in that** at least one first flow gap (31) is formed between the at least two first recesses (29, 30), and measures between 2% and 3% of the diameter (32) of the outer tube (10).

3. The heat transfer tube (5) according to claim 1, **characterized in that** at least one second flow gap (37) is formed between the at least two second recesses (35, 36), and measures between 18% and 22% of the diameter (32) of the outer tube (10).

4. The heat transfer tube (5) according to claim 1, **characterized in that** the first and second recesses (29, 30, 35, 36) are formed on the same axial position of the second longitudinal section (23) of the outer tube (10).

5. The heat transfer tube (5) according to claim 1, **characterized in that** the flow cross section (39) of the second longitudinal section (23) of the outer tube (10) formed by the first and second recesses (29, 30, 35, 36) has an H-shaped cross section.

6. The heat transfer tube (5) according to one of the preceding claims, **characterized in that** the axial length (25) of the first longitudinal section (22) corresponds to at least double the axial length (26) of the second longitudinal section (23).

7. The heat transfer tube (5) according to one of the preceding claims, **characterized in that** the profile insert (11) comprises a tube body, which consists of at least two shell elements (15, 16) that each have a cross section shaped like a semicircular portion.

8. The heat transfer tube (5) according to claim 7, **characterized in that** the tubular body comprises two shell elements (15, 16), which at their touching longitudinal edges (17) are formed with groove-shaped depressions (18) and rib-like projections (19), and thus intermesh like a seal, wherein the inside of the two shell elements (15, 16) are formed with the ribs (14) that protrude into the clear cross section of the tubular body and extend in the longitudinal direction (12) of the outer tube (10) in such a way that the ribs (14) of each shell element (15, 16) form a unilaterally open profile.

9. The heat transfer tube (5) according to claim 8, **characterized in that** the two shell elements (15, 16) are each formed with a sealing groove (18) on one longitudinal edge (17), and with a sealing rib (19) adjusted to the shape of the sealing groove (18) on the other longitudinal edge (17).

10. The heat transfer tube (5) according to one of the preceding claims, **characterized in that** the outer tube (10) is made out of a metal alloy, preferably steel, and the profile insert (11) out of aluminum.

11. A boiler (2), in particular a condensing boiler, to heat the heating water of a heating circuit, with a housing (1) that borders a hot water chamber (3) and which has a combustion chamber (4) upstream from the hot water chamber (3),
**characterized in that**
at least one heat transfer tube (5) according to one of claims 1 to 10 is arranged inside of the housing (1), which proceeds from the combustion chamber (4) and extends through the hot water chamber (3).

12. The boiler (2) according to claim 11, wherein the second longitudinal section (23) of the outer tube (10) having at least one cross section-constricting element (24) is arranged between the combustion chamber (4) and the first longitudinal section (22) of the outer tube (10).

## Revendications

1. Tuyau de transfert de chaleur (5) d'une chaudière (2), en particulier d'une chaudière à condensation, présentant un tuyau extérieur (10) qui peut être traversé par des fumées de la combustion de la chaudière et peut être entouré à l'extérieur par de l'eau chaude, et un insert profilé (11) poussé dans le tuyau extérieur, qui présente des nervures (14) pour agrandir la surface intérieure du tuyau extérieur (10) dans son sens longitudinal (12) et est en contact de transfert de chaleur avec le tuyau extérieur (10),
dans lequel un premier tronçon longitudinal (22) du tuyau extérieur (10) est formé cylindrique et à parois lisses, et
dans lequel l'insert profilé (11) s'étend exclusivement sur le premier tronçon longitudinal (22) du tuyau extérieur (10),
**caractérisé en ce qu'**
un second tronçon longitudinal (23) du tuyau extérieur (10) présente au moins un élément de resserrement de section (24) resserrant la section d'écoulement,
dans lequel l'au moins un élément de resserrement de section (24) comprend au moins deux premiers creux (29, 30) qui sont formés dans la paroi du second tronçon longitudinal (23) du tuyau extérieur (10),
dans lequel les deux premiers creux (29, 30) sont disposés diamétralement opposés et sont conçus en symétrie de miroir par rapport à un premier plan de tuyau (27),
dans lequel l'élément de resserrement de section (24) comprend, en plus des au moins deux premiers creux (29, 30), au moins deux seconds creux (35, 36) qui sont formés par la paroi du second tronçon longitudinal (23) du tuyau extérieur (10),
dans lequel les deux seconds creux (35, 36) sont disposés diamétralement opposés et sont conçus en symétrie de miroir par rapport à un second plan de tuyau (28) qui est perpendiculaire au premier plan de tuyau (27), et
dans lequel l'au moins un élément de resserrement de section (24) est disposé sur une entrée du tuyau extérieur (10) qui présente l'entrée pour alimenter les fumées et une sortie pour évacuer les fumées.

2. Tuyau de transfert de chaleur (5) selon la revendication 1, **caractérisé en ce qu'**entre les aux moins deux premiers creux (29, 30), au moins une première fente d'écoulement (31) est formée qui fait entre 2 % et 3 % du diamètre (32) du tuyau extérieur (10).

3. Tuyau de transfert de chaleur (5) selon la revendication 1, **caractérisé en ce qu'**entre les aux moins deux seconds creux (35, 36), au moins une seconde fente d'écoulement (37) est formée qui fait entre 18 % et 22 % du diamètre (32) du tuyau extérieur (10).

4. Tuyau de transfert de chaleur (5) selon la revendication 1, **caractérisé en ce que** les premiers et seconds creux (29, 30, 35, 36) sont conçus à une même position axiale du second tronçon longitudinal (23) du tuyau extérieur (10).

5. Tuyau de transfert de chaleur (5) selon la revendication 1, **caractérisé en ce que** la section d'écoulement (39) du second tronçon longitudinal (23) du tuyau extérieur (10) formée par les premiers et seconds creux (29, 30, 35, 36) présente une section en H.

6. Tuyau de transfert de chaleur (5) selon l'une des revendications précédentes, **caractérisé en ce que** la longueur axiale (25) du premier tronçon longitudinal (22) correspond au moins à 2 fois la longueur axiale (26) du second tronçon longitudinal (23).

7. Tuyau de transfert de chaleur (5) selon l'une des revendications précédentes, **caractérisé en ce que** l'insert profilé (11) présente un corps de tuyau qui est formé par au moins deux éléments de coque (15, 16) qui présentent chacun une section circulaire.

8. Tuyau de transfert de chaleur (5) selon la revendication 7, **caractérisé en ce que** le corps de tuyau comprend deux éléments de coque (15, 16) qui sont formés avec des creux (18) en forme de rainure et des saillies (19) en forme de nervure sur leurs bords longitudinaux (17) qui se touchent et s'engrènent ainsi l'un dans l'autre en formant une étanchéité, dans lequel les deux éléments de coque (15, 16) sont formés sur leur face intérieure avec des nervures (14) s'étendant dans le sens longitudinal (12) du tuyau extérieur (10) dans la section intérieure du corps de tuyau de telle façon que chaque élément de coque (15, 16) forme avec ses nervures (14) un profilé ouvert d'un côté.

9. Tuyau de transfert de chaleur (5) selon la revendication 8, **caractérisé en ce que** les deux éléments de coque (15, 16) sont formés respectivement sur un bord longitudinal (17) avec une rainure d'étanchéité (18) et sur l'autre bord longitudinal (17) avec une nervure d'étanchéité (19) adaptée à la forme de la rainure d'étanchéité (18).

10. Tuyau de transfert de chaleur (5) selon l'une des revendications précédentes, **caractérisé en ce que** le tuyau extérieur (10) est fabriqué dans un alliage métallique, de préférence de l'acier, et l'insert profilé (11) est fabriqué en aluminium.

11. Chaudière (2), en particulier chaudière à condensation, pour réchauffer de l'eau chaude d'un circuit d'eau chaude, présentant un caisson (1) qui délimite un espace d'eau chaude (3) et qui présente une chambre de combustion (4) raccordée en amont de l'espace d'eau chaude (3),
**caractérisé en ce**
**qu'**à l'intérieur du caisson (1), au moins un tuyau de transfert de chaleur (5) selon l'une des revendications 1 à 10 est disposé qui part de la chambre de combustion (4) et s'étend en passant à travers l'espace d'eau chaude (3).

12. Chaudière (2) selon la revendication 11, dans lequel le second tronçon longitudinal (23) du tuyau extérieur (10) présentant un élément de resserrement de section (24) est disposé entre la chambre de combustion (4) et le premier tronçon longitudinal (22) du tuyau extérieur (10).
